# EUROPEAN PATENT APPLICATION

(11) **EP 4 755 548 A1**
(43) Date of publication of application: **10.06.2026**
(21) Application number: 24218071.9
(22) Date of filing: 06.12.2024
(51) Int. Cl.: B22F 1/065, B22F 1/142, B22F 3/10, B22F 3/15, B22F 9/02, B22F 10/14, B22F 10/34, B33Y 40/10, B33Y 70/10, C22C 29/04, C22C 29/08, B22F 1/052, B22F 9/04, C22C 29/06, C22C 29/10, C22C 29/16

(54) **A METHOD OF MAKING A CERMET OR CEMENTED CARBIDE POWDER**

(71) Applicant: AB Sandvik Coromant, 811 81 Sandviken (SE)
(72) Inventor: SUNDSTRÖM, Johan, 811 81 SANDVIKEN (SE)
(74) Representative: Sandvik

(57) **Abstract**

The present disclosure relates to a method of making a powder of dense and spherically shaped cemented carbide or cermet particles. The present disclosure also relates to a powder produced by the method and use of said powder in additive manufacturing such as 3D printing by the binder jetting technique.

## Description

### TECHNICAL FIELD

The present disclosure relates to the technical field of making a powder of dense and spherically shaped cemented carbide or cermet particles. The present disclosure also relates to a powder produced by the method.

### BACKGROUND

Additive manufacturing alias 3D (three dimensional) printing is a process of making three-dimensional solid components from a digital model using an additive process. In such a process layers of material are successively laid down and the component is built up layer by layer. 3D printing differs from traditional machining techniques in that it is a process building up the shape, whereas traditional machining typically relies on the removal of material from a work piece by methods such as cutting or drilling and thereby forming the final shape.

A powder of dense and spherically shaped cermet or cemented carbide particles has shown to fulfill many of the demands of a powder for 3D printing a cermet or cemented carbide body. One method of making a powder of dense and spherically shaped cermet or cemented carbide granules is disclosed in WO2015/162206A2. In this method carbon can be used as a sintering inhibitor powder during the sintering of the cermet or cemented carbide powder to prevent co-sintering of the cermet or cemented carbide particles during the sintering.

A problem with the known method of making powders of dense and spherically shaped cermet or cemented carbide particles is that it is very difficult to completely remove residuals of the carbon sintering inhibitor powder.. There is a continuous need of providing efficient methods of making a high-quality powder of dense and spherically shaped cermet or cemented carbide particles.

### DESCRIPTION OF THE INVENTION

It is an object of the present invention to at least partly obviate the above-mentioned problem. This object is achieved by a method according to claim 1. Preferred embodiments are disclosed in the dependent claims.

The present disclosure relates to a method of making a powder of dense and spherically shaped cermet or cemented carbide particles, wherein the method comprises the steps of:
(a) forming spherically shaped granules comprising metal, hard constituents and organic binder;
(b) mixing said spherically shaped granules with a sintering inhibitor powder comprising carbon, preferably graphite, to form a first powder mixture of spherically shaped granules and sintering inhibitor powder;
(c) loading the first powder mixture of spherically shaped granules and sintering inhibitor powder in a furnace chamber;
(d) heat-treating the first powder mixture obtained in step (b) in the furnace chamber up to a sintering temperature to remove organic binder from the spherically shaped granules and to sinter the hard constituents with the metal in each spherically shaped granule and thereby forming a second powder mixture comprising sintered dense spherically shaped cermet or cemented carbide particles and sintering inhibitor powder;
(e) unloading the second powder mixture comprising sintered dense spherically shaped particles and sintering inhibitor powder from the furnace chamber; and
(f) separating the sintering inhibitor powder from the sintered dense spherically shaped particles whereby a final powder of dense and spherically shaped cermet or cemented carbide particles is formed, wherein the separating includes a step (g) of subjecting the dense and spherically shaped cermet or cemented carbide particles to jet milling.

Jet milling is a process where a batch of powder is placed in a jet mill chamber. High velocity air streams are directed into the chamber and at least one of the streams are positioned at the bottom of the chamber to create a fluidized bed. During the jet milling process powder particles are entrained by the air streams to collide with each other at a focal point. In front of an air outlet there is a classifying wheel that rotates and that prevents powder particles of a specific size, shape, and density from following the air flow through the classifier wheel and out of the chamber. The classifier wheel promotes passage of light and fine particles while dense and large particles will continue to be processed in the jet mill chamber. The preferred particle size is possible to tune in by the classifier rotation speed. The powder particles that are too fine and light are separated from the powder, following the air flow through the classifier wheel and out of the chamber and are collected via a cyclone in a collector. Thereby, low density graphite particles are separated from the powder at a larger particle size than high density cermet or cemented carbide particles.

A jet milling process is normally intended for milling a powder, but according to the method of the present invention the process has been modified with regards to nozzle diameters and flow parameters during the jet milling to avoid mill or comminute the dense cermet or cemented carbide particles. Instead, the jet milling process parameters are set to selectively mill the more friable carbon particles into smaller carbon particles. One advantage with the method in accordance with the present disclosure is thus that a final powder of dense and spherically shaped cermet or cemented carbide particles with a desired carbon content can be made without including any larger carbon particles.

A small fraction of carbon particles tends to remain in the cermet or cemented carbide powder even after traditional separation steps such as air classification and thermochemical decarburization. Carbon particles that are too large do not become separated by for example an air classification step unless it must coincide with separation of the finest cermet or cemented carbide particles. And such large carbon particles are not noteworthy being reduced in size during a thermochemical decarburization step. There are several disadvantages with a cermet or cemented carbide powder containing larger carbon particles, for example that the total carbon content in the final powder is higher than the aimed carbon content of the cermet or cemented carbide, that the density and flow of the powder is insufficient and that larger carbon particles can cause a local carbon enrichment or a pore in the final 3D printed or near net shape HIP produced product. With the present method the larger carbon particles are milled in the jet milling process and therein also removed from the cermet or cemented carbide powder.

Another advantage with the adjusted jet milling process as disclosed herein is that it reduces the presence of a carbon layer on the outer surfaces of the cermet or cemented carbide particles, without milling the cermet or cemented carbide particles. This outer carbon layer forms during and/or after sintering of the cermet or cemented carbide particles. It has been shown time consuming to remove such carbon films with for example thermochemical decarburization. One advantage with the method in accordance with the present disclosure is thus that a powder of dense and spherically shaped cermet or cemented carbide particles with a specified carbon content can be made in a more efficient manner.

The method of the present invention comprises a step of forming spherically shaped granules comprising metal, hard constituents, and organic binder. This forming step is preferably performed by spray drying. The organic binder can for example be PEG (polyethylene glycol). The metal is typically Cobalt (Co) or a mixture of Co and one or more of Nickel (Ni), Iron (Fe), Chromium (Cr) and Molybdenum (Mo). The hard constituents is preferably carbides and may for example be WC, TiC, TiN, Ti(C,N) and/or NbC. The step of providing the granules with a spherical shape is advantageous since the subsequent heating process will ideally make the granules to shrink but preserve their original spherical shape.

The step of mixing the spherically shaped granules with a sintering inhibitor powder to form a first powder mixture of spherically shaped granules and sintering inhibitor powder may be performed in a conventional mixing equipment, but care should be taken not to damage the granules and thereby reduce their sphericity.

The step of loading the first powder mixture of spherically shaped granules and sintering inhibitor powder in a furnace chamber may typically be performed by placing said mixture in a vessel that can be loaded in the furnace chamber.

The step of heat-treating the first powder mixture of spherically shaped granules and sintering inhibitor in the furnace chamber up to a sintering temperature is performed to remove the organic binder from the spherically shaped granules and to sinter the hard constituents with the metal in each spherically shaped granule and thereby form a second powder mixture of sintered dense spherically shaped particles and sintering inhibitor powder. At an initial stage of the heating, before the sintering temperature has been reached, the organic binder will decompose and evaporate and will leave the spherically shaped granules via the flowing gas. At the sintering temperature, the metal and the hard constituents will sinter and form dense spherically shaped particles. The sintering temperature is preferably chosen to provide liquid state sintering, for example between 1300°C and 1500°C.

The step of unloading the second powder mixture of sintered dense spherically shaped particles and sintering inhibitor powder from the furnace chamber may be performed after a cooling step wherein the second powder mixture of sintered dense spherically shaped particles and sintering inhibitor powder has reached a temperature of below about 200°C.

The purpose of the inhibitor powder is to prevent the spherically shaped particles from building inter-particle bonds during sintering. Without any sintering inhibitor powder, strong inter-particle bonds will be formed during sintering at temperatures above the solidus temperature of the metal in the cermet or cemented carbide. Mechanical forces can be applied (e.g. in a disintegrator mill) to break these bonds. However, during such an operation, a large fraction of the particles will be fractured, whilst yet another fraction might not be separated into their individual particle entities. The latter case is mostly evident for the finest particles that due to their small radius creates much stronger sintering necks. Hence, the degree of sphericity will be substantially decreased due to these circumstances. The usage of inhibitor powder in the sintering heat-treatment will allow intra-particle sintering while avoiding inter-particle sintering. Thus, making it possible to produce cermet or cemented carbide particles that are both dense and spherical in a cost-effective manner.

The step of separating the sintering inhibitor powder from the sintered spherically shaped dense particles may be performed in one jet milling step or several subsequent steps using jet milling in combination with other known separation techniques. The result from the separation is a final powder of dense and spherically shaped cermet or cemented carbide particles without presence of inhibitor powder.

In one embodiment of the present invention the jet pressure during the jet milling in step (g) is between 1 and 4 bar, preferably between 2 and 3 bar. If the jet pressure is too high there is a risk that the cermet or cemented carbide particles suffer from breakage. The suitable pressure will depend on how fragile vs. how tough the cermet or cemented carbide particles are. A relatively high pressure can be selected if the particles are tough. Toughness is generally increased with a higher metal binder content and finer grain size of the hard constituents (such as WC) in the cermet or cemented carbide particles. Toughness is also favored by thorough liquid phase sintering allowing a well distributed metal binder around the hard constituents, i.e around the WC grains in a cemented carbide. A too low jet pressure reduces the process efficiency which increases the suitable processing time. If the jet pressure is too low there is also a risk that any remaining larger carbon particles are not milled down efficient and in time. The optimal jet pressure is to be selected by the person skilled in the art.

In one embodiment of the present invention the jet milling in step (g) is performed during 10-90 minutes, preferably 30-60 minutes. The time of jet milling is suitably short to save money in production, but a certain minimum time is needed for obtaining the desired powder properties. The optimal time of jet milling depends on the specific powder and the targeted properties. If the powder is fine and have a high specific area it can accommodate more coated carbon on the surface of the particles per kilogram powder. Further, the amount of coated carbon increases with increasing metal binder content in the cermet or cemented carbide. An increased amount of coated carbon will typically increase the jet milling processing time needed. If the jet milling is mainly carried out for the purpose of deagglomeration then the optimal processing time depends on to what degree the powder has been agglomerated, for example in a prior thermochemical decarburization step, which in turn is influenced by particle size and metal binder content of the cermet or cemented carbide. A fine cermet or cemented carbide powder with high metal binder content that has been decarburized at high temperature tends to agglomerate harder and will therefore benefit from longer jet milling times. On the other hand, longer jet milling time incurs cost mainly due to the amount of pressurized air being consumed. The optimal processing time can be selected by the person skilled in the art.

In one embodiment of the present invention the separating step (f) further includes an air classification step (h) prior to the jet milling step (g). An air classification step prior to the jet milling step is advantageous in that most of the graphite inhibitor powder is removed prior to the jet milling step which makes the overall process more energy- and time efficient. The purpose of this step is to remove as much as possible of the inhibitor powder without loosening the finest spherical and dense cermet or cemented carbide particles, typically down to about 3 µm in size. The person skilled in the art can select the suitable sieving settings.

In one embodiment of the present invention the separating step (f) further includes a thermochemical decarburizing step (i) performed before the jet milling step (g), and if the method includes an air classification step (h) then said thermochemical decarburizing step (i) is performed after said air classification step (h), wherein the thermochemical decarburizing step is performed using a gas at elevated temperature, preferably performed in a rotating tube furnace. A separation step that also includes thermochemical decarburizing step is advantageous if a final carbon content below the saturated carbon content of the cermet or cemented carbide is aimed for.

Thermochemical decarburizing is also advantageous since some of the coated carbon might be hidden in recesses and hollows of some particles and can therefore not be jet milled away.

In one embodiment the thermochemical decarburization is taking place via an oxidative decarburization reaction. Oxidation can either be made as a pretreatment in air at 300°C - 500°C to be followed by annealing in vacuum, inert gas and/or hydrogen at 700°C -900°C; or, by hydrogen with added oxygen and/or moisture and/or carbon dioxide at 700°C - 900°C. The exact procedure to be applied can be selected by a person skilled in the art. An oxidative decarburization will increase the oxygen content of the powder, and since it is advantageous to keep oxygen content low, such as <0.2 wt% or preferably <0.1 wt%, it is advantageous that the last stage of the process is carried out under highly reducing conditions such as by using pure flowing hydrogen and/or high vacuum pumping conditions at 700°C -900°C.

In one embodiment the thermochemical decarburization is taking place via an non-oxidative decarburization reaction. Non-oxidative decarburization, i.e. by pure hydrogen flow, is proceeding at a very low rate if carried out before a jet milling step and is therefore preferably performed after jet milling..

It is an advantage to perform a thermochemical decarburizing before the jet milling step (g), and if the method includes an air classification step (h) then said thermochemical decarburizing step (i) is performed after said air classification step (h). This is advantageous since the number of jet milling steps can thereby be only one.

In one embodiment of the present invention the thermochemical decarburizing step (i) is made at a temperature of between 700°C and 900°C, preferably between 750°C and 800°C. If the temperature is too high there is a risk that the density and flow properties of the powder are deteriorated. If the temperature is too low the efficiency of the process is decreased.

In one embodiment of the present invention the method further comprises a thermochemical decarburizing step (j) performed after or subsequent to the jet milling step (g), wherein said thermochemical decarburizing step (j) is performed using a gas at elevated temperature, preferably performed in a rotating tube furnace. This further thermochemical decarburizing step (j) is advantageous in that the carbon content of the powder can be further reduced.

In one embodiment of the present invention the separation includes only a single jet milling step. The jet milling step is preferably the final step in the method of making the final cermet or cemented carbide powder.

In one embodiment of the present invention the thermochemical decarburizing step (j) is made at a temperature of between 700°C and 900°C, preferably between 750°C and 800°C. If the temperature is too high there is a risk that the density and flow properties of the powder are deteriorated. If the temperature is too low the time and efficiency of the process is decreased.

In one embodiment of the present invention, where the method includes a thermochemical decarburizing step (j) performed after or subsequent to the jet milling step (g), the method further comprises an additional jet milling step (k) performed subsequent to said thermochemical decarburizing step (j). An additional jet milling step (k) can be advantageous as it serves to deagglomerate the powder particles and thereby provides a good flow and density of the final powder. A deagglomeration can alternatively be made with another method known to the skilled person.

In one embodiment of the present invention, wherein the method comprises an additional jet milling step (k), the jet pressure during the additional jet milling in step (k) is between 1 and 4 bar. If the jet pressure is too high there is a risk that the cermet or cemented carbide particles suffer from breakage. The suitable pressure will depend on how fragile vs. how tough the cermet or cemented carbide particles are. As toughness increases larger pressures can be selected. Toughness is favored by higher metal binder content and finer WC grain size in the cermet or cemented carbide particles. Toughness is also favored by thorough liquid phase sintering allowing a well distributed binder phase around the WC grains and with minimum remaining porosity inside the cermet or cemented carbide particles. As jet pressure is reduced the process efficiency is also reduced which increases the suitable processing time. The jet pressure is to be selected by the person skilled in the art.

In one embodiment of the present invention, wherein the method comprises an additional jet milling step (k), this jet milling in step (k) is performed during 10-60 minutes. The time of jet milling is suitable short to save money in production. When such an additional jet milling step (k) is carried out the purpose of jet milling is deagglomeration, and here the optimal processing time depends on to what degree the powder has been agglomerated in the prior thermochemical decarburization step, which in turn is influenced by temperature, particle size and metal binder content of the cermet or cemented carbide. A fine particle size of the cermet or cemented carbide powder with high metal binder content that has been decarburized at high temperature tends to agglomerate harder and will therefore benefit from longer jet milling times. On the other hand, longer jet milling times incurs cost for example due to the amount of pressurized air being consumed. The optimal processing time can be tuned in by experiments and determined by a person skilled in the art.

The present invention also relates to a powder of cermet or cemented carbide made in accordance with the present invention. The powder can thereby be made to have a carbon content that is adjusted for the intended application. Advantages of the powder are controlled carbon content, good flow properties and high density.

The present invention also relates to a use of the powder in accordance the present invention in additive manufacturing or near net shape HIP. The advantageous properties of the powder as disclosed above such as a correct carbon content, good flow properties and high density values makes the powder suitable to use in both additive manufacturing and near net shape HIP.

A powder produced in accordance with the present disclosure can be used in powder metallurgy (PM) area for example for manufacturing of near net shaped cermet or cemented carbide components. The application area of the present disclosure is as powder feedstock for binder jetting 3D-printing techniques and also near net shape HIP of encapsulated powder. Alternatively, the powder can be used in other types of additive manufacturing techniques as well as other PM-techniques in general.

One advantage with the process as defined hereinabove or hereinafter is that the obtained 3D printed component can be a fully dense net- or near net shaped component, thus the obtained component will have almost no voids or have no voids.

Other aspects, advantages and novel features of the disclosure will become apparent from the following detailed description of the disclosure when considered in conjunction with the accompanying drawings and claims.

### BRIEF DESCRIPTION OF DRAWINGS

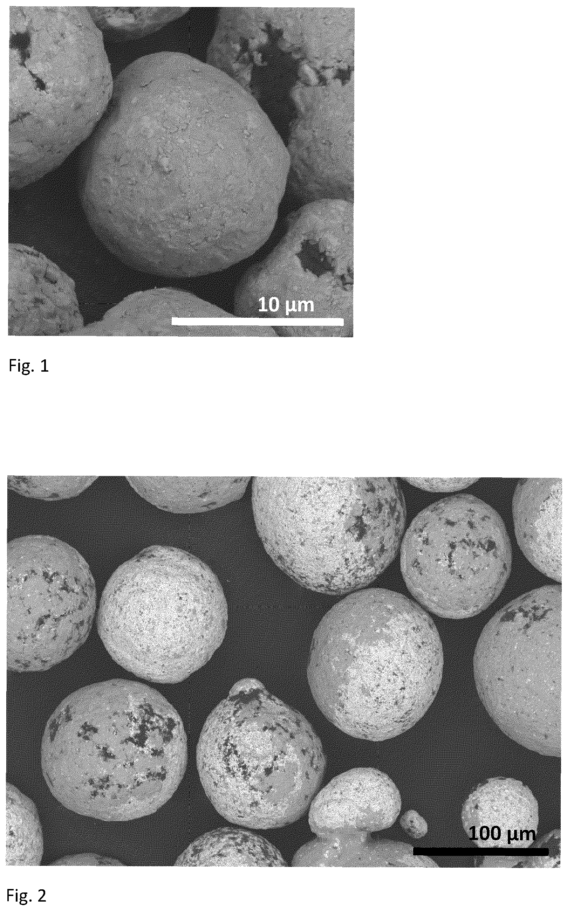

Figures 1 shows a Scanning Electron Microscope (SEM) image of a dense cemented carbide particle made in accordance with the present invention.
Figures 2 shows a Scanning Electron Microscope (SEM) image of dense cemented carbide particles made in accordance with the present invention.

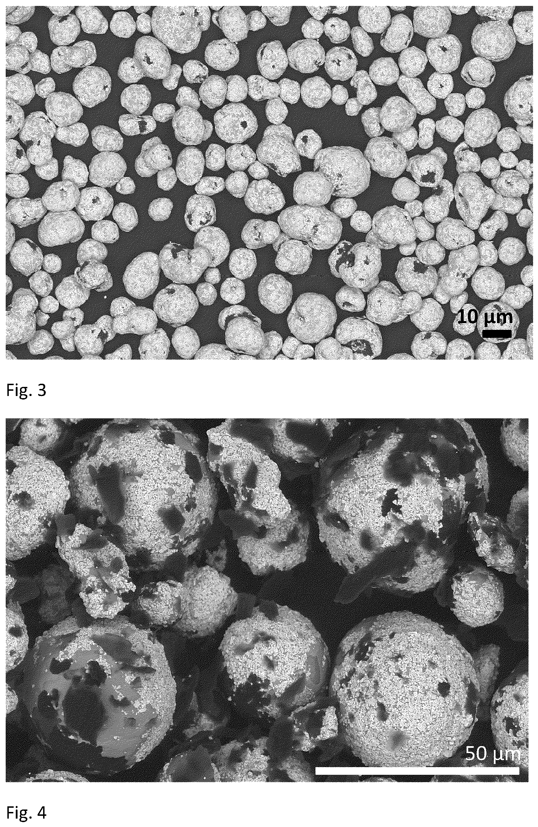

Figures 3 shows a Scanning Electron Microscope (SEM) image of dense cemented carbide particles made in accordance with the present invention.
Figures 4 shows a Scanning Electron Microscope (SEM) image of a second powder mixture before subjected to air classification or jet milling showing free graphite and spherically dense cemented carbide particles.

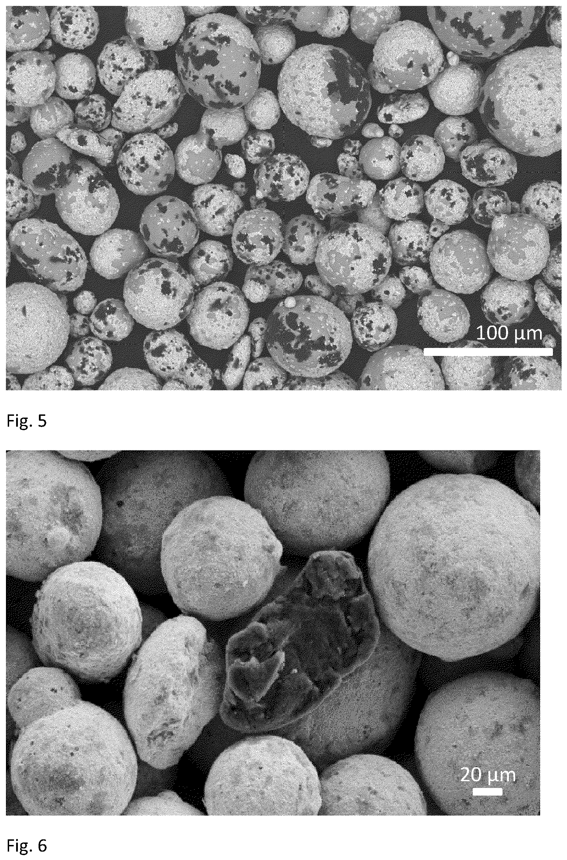

Figures 5 shows a Scanning Electron Microscope (SEM) image of a second powder mixture after subjected to air classification but before subjected to jet milling showing spherically dense cemented carbide particles with carbon on some surfaces.
Figures 6 shows a Scanning Electron Microscope (SEM) image of a powder made without jet milling showing a large carbon particle.

### DEFINITIONS

The term "cermet" is herein intended to denote a material comprising a ceramic phase, i.e. hard constituents, and a metallic binder phase. The hard constituents can for example mainly be composed of TiCN, preferably the TiCN content in the cermet is larger than 50 vol%.

The term "cemented carbide" is herein intended to denote a material comprising a ceramic phase, i.e. hard constituents, and a metallic binder phase, where the ceramic phase comprises WC and the metallic phase comprises Co and optionally one or more of Ni, Fe, Cr and Mo. The WC content in the cemented carbide is preferably larger than 50 vol%.

The term "hard constituents" is the ceramic phase in the cermet or in the cemented carbide. These hard constituents are usually carbides or nitrides or carbonitrides.

The term "granule" refers to the agglomerated state of a mixture that is produced by e.g. spray drying, that includes organic binder and that is not sintered.

The term "dense cermet or cemented carbide particle" refers to the sintered and densified granule.

The term "sintering" is a generic term for a process wherein heating under controlled atmosphere is conducted in order to minimize the surface of a particulate system, which mostly is associated with generation of bonds between neighboring particles and shrinkage of the aggregated particles.

The term "powder mixture" is herein used for the mixed powder of inhibitor powder comprising carbon and cermet or cemented carbide powder. A powder mixture of spherically shaped granules of metal, hard constituents and organic binder with sintering inhibitor powder is herein called a "first powder mixture", while the sintered dense spherically shaped cermet or cemented carbide particles mixed with sintering inhibitor powder is herein called a "second powder mixture".

The "final powder of dense and spherically shaped cermet or cemented carbide particles" of the present invention is a powder where the inhibitor powder has been separated from the cermet or cemented carbide powder. This final powder does contain residual carbon dissolved in the cermet or cemented carbide material, but can also to some extent still contain some carbon at the outer surface of the cermet or cemented carbide particles as a carbon layer, or as few larger carbon particles.

The term "intra-particle sintering" refers to the sintering inside a granule causing the individual granules to densify and shrink and to form a dense and spherically shaped particle.

The term "inter-particle sintering" refers to the creation of sintering bonds between neighboring particles.

The term "solidus" refers to a certain temperature that when being exceeded leads to the inception of liquid phase formation.

The term "about" as used herein is intended to mean +/- 10% of the numerical value.

### METHODS

The carbon and oxygen content in the powder were analyzed in a LECO carbon and oxygen analyzer. Carbon content was measured by the combustion method using a LECO CS-844 analyzer. Oxygen content was measured by the combustion method using a LECO ON-837 analyzer. To measure free carbon the powder was leached in acid to dissolve the metallic and carbide constituents. The elemental "free" carbon was then filtered and analyzed separately.

### EXAMPLES

For further illustrating the present disclosure, it is further described by the following nonlimiting examples. Two examples of methods are disclosed here below: method of making powder 1 is a large batch process and the method of making powder 2 is a smaller batch process.

### Method of making Powder 1

### Composition

Granules were formed from a slurry comprising powders of WC, Co mixed with PEG and 90/10 ethanol/water. The slurry was spray dried in a Niro-spray drying equipment.

The final cemented carbide powder composition to be formed as Powder 1 was a 12 wt% Co and 88 wt% WC material and the relative composition of the powders in the slurry were adapted therefor. The spray dried spherically shaped granules comprised about 2 wt% PEG.

### Mixing

An amount of 254 kg spray dried spherically shaped granules were mixed with graphite in a ratio of 90.2 wt% granule powder and 9.8 wt% graphite powder. The graphite powder was of grade 94006 from Asbury Graphite NL B.V. and was specified as 99.99% finer than 44 µm and 90% finer than 8.91 µm and 50% finer than 4.97%. The shape of the graphite particles was typically flaky.

### Loading and sintering

The first powder mixture of spherically shaped granules and graphite was distributed on graphite vessels. The vessels were filled to a height of at least 4 cm and sometimes up to 6 cm. The solidus temperature of this cemented carbide saturated with carbon is about 1290 °C. The vessels were placed in a furnace chamber.

The heating cycle comprised slow heating during a constant flow of hydrogen up to 600 °C to allow the organic binder to degas. Thereafter the furnace chamber was evacuated down to vacuum before heating further at a temperature increased by 360 °C per hour. At the reached sintering temperature of 1350°C (maximum temperature), the temperature was held constant for 90 minutes. Thereafter a cooling step was performed whereby the heating was turned off and the temperature was decreased down to below 150°C before the vessel was discharged from the chamber.

### Separating

After the sintering, the sintered spherically shaped particles were separated from the graphite powder and reduced in carbon content in several steps and the carbon content in the powder were measured, see Table 1. The steps are described in detail below.

**Table 1. Methods of removing carbon to form Powder 1**

| **Powder 1** | | | | |
|---|---|---|---|---|
| Method steps | Particle size [µm] | Carbon content [wt%] | Free carbon [wt%] | Oxygen content [wt%] |
| As sintered | n.a. | About 14.7 | About 9.8 | n.a. |
| After Air classification | n.a. | 5.87 | 0.41 | n.a. |
| After Jet milling 1 | <50 | 5.73 | 0.36 | n.a. |
| | 50-100 | 5.74 | 0.33 | n.a. |
| After oxidation | <50 | 5.62 | 0.29 | 0.35 |
| | 50-100 | 5.59 | 0.25 | 0.33 |
| After vacuum annealing | <50 | 5.44 | 0.14 | 0.00 |
| | 50-100 | 5.44 | 0.16 | 0.05 |
| After jet milling 2 | n.a. | 5.43 | 0.13 | 0.035 |

| | | | | |
|---|---|---|---|---|
| n.a.=not analysed | | | | |

The theoretical carbon content in a cemented carbide is the carbon content assuming that the WC is stoichiometric, i.e. the relation between W and C is 1:1, which for a cemented carbide with 12 wt% Co is 5.397 wt% C. C can however be dissolved in solid solution in the Co and the C content can be varied without any formation of free graphite or eta phase. Such range for the present composition is about 5.2-5.4 wt% C.

### Air classification

An air classification was performed in a laboratory air classification machine from Hosokawa Alpine (ATP50). By adjusting the parameters of the air classification machine to optimized performance a removal of loose graphite powder was obtained.

In this operation cemented carbide fragments finer than about 3 µm are collected in the "fine powder bin" together with graphite particles. The remaining powder is collected in the "coarse powder bin". Residues of coarse graphite particles follow the powder outlet to the "coarse powder bin". Unlike most graphite powder particles that are flaky, these coarser residual graphite particles typically have a less flaky and more compact shape with a size often in the 10-20 µm range. They follow into the "coarse powder bin" because of the chosen set of parameters in the air classification, which is chosen for the purpose of collecting cemented carbide particles larger than about 3 µm into the "coarser powder bin". The coarser powder was then examined in SEM and analysed for carbon. Total carbon content was measured as well as the so called "free carbon" content. Free carbon is elemental carbon that is assumed to originate from residual graphite particles and graphite coated on the particles surfaces, that is thereby not dissolved in the metal phase nor part of the carbide compound of the cemented carbide.

### First Jet milling

The equipment used for the jet milling was a Jet Mill model 200 AFG from Hosokawa Alpine. In each jet milling 30-50 kg of powder was charged and processed for 60 minutes using 2.5 bar's inlet air pressure and 3000-4000 rpm classifier wheel speed. By using this set of parameters, the cemented carbide particles are not milled. Remaining graphite particles are milled and carbon on the surfaces of the cemented carbide particles are fretted off. As a result, fine carbon particles are thereby removed from the powder via the classification wheel.

The powder batches collected from the 200 AFG-unit were examined, sieved and chemically analysed, see Table 1. Sieve size data was about 36 % <50 µm, 63 % 50-100 µm and 0.56 % >100 µm.

### Oxidation followed by vacuum annealing - thermochemical decarburizing

The powder was then put in a heating cabinet for oxidation in air at 300°C. The weight increase was monitored to reach 0.23 % before cooling down. Chemical analyses of carbon and oxygen were done, see Table 1. The oxidation causes an increase of oxygen content but also a decrease of carbon content.

The powder was subsequently spread out in thin layers on graphite trays for vacuum annealing. The annealing was performed at 750°C during 9 hours. Chemical analyses of carbon and oxygen were done, see Table 1.

### Second Jet milling

The powder was put into a 200 AFG unit for jet milling for 30 minutes using 2.5 bar's inlet air pressure and 3000-4000 rpm classifier wheel speed. The chemical data reveals that only a very limited amount of free carbon is decreased in this step, see Table 1.

### Method of making Powder 2

### Composition

Granules were formed from a slurry comprising powders of WC, Co mixed with PEG and 90/10 ethanol/water. The slurry was spray dried in a Niro-spray drying equipment. The final cemented carbide to be formed as Powder 2 was a 12 wt% Co and 88 wt% WC material and the relative composition of the powders in the slurry were adapted therefor. The spray dried spherically shaped granules comprised about 2 wt% PEG.

### Mixing

The 19 kg spherically shaped granules were mixed with 2 kg graphite powder. The graphite powder was of grade 94006 from Asbury Graphite NL B.V. and was specified as 99.99% finer than 44 µm and 90% finer than 8.91 µm and 50% finer than 4.97%. The shape of the graphite particles was typically flaky.

### Loading and sintering

The mixture of spherically shaped granules and graphite was distributed on graphite vessels. The vessels were filled to a height of at least 4 cm and sometimes up to 6 cm. The solidus temperature of this cemented carbide when saturated with carbon is about 1290 °C.

The heating cycle comprised heating during a constant flow of hydrogen up to 600 °C to allow the organic binder to degas. Thereafter the furnace chamber was evacuated down to vacuum before heating further at a temperature increase by 360 °C per hour. At a temperature of 1350°C (sintering temperature), the temperature was held constant for 90 minutes. Thereafter the heating was turned off to let the furnace cool down to below 150 °C before opening the chamber and discharging the vessels.

### Separating

After the sintering, the sintered spherically shaped cemented carbide particles were separated from the graphite powder and reduced in carbon content in several steps and the carbon and oxygen content in the powder were regularly measured, see Table 2. The steps are described in below.

**Table 2. Methods of removing carbon to form Powder 2**

| **Powder 2** | | | | |
|---|---|---|---|---|
| Method step | Particle size [µm] | Carbon content [wt%] | Free carbon [wt%] | Oxygen content [wt%] |
| As sintered | n.a. | About 14.7 | About 9.8 | n.a. |
| After Air classification | < 50 µm | 5.69 | 0.29 | 0.00 |
| | 50-100 µm | 5.69 | 0.29 | 0.00 |
| | 100-200 µm | 5.67 | 0.28 | 0.00 |
| After Jet milling 1 | < 50 µm | 5.52 | 0.15 | 0.031 |
| | 50-100 µm | 5.54 | 0.14 | 0.007 |
| | 100-200 µm | 5.52 | 0.13 | 0.00 |
| After vacuum annealing | < 50 µm | 5.25 | n.a. | 0.23 |
| | 50-100 µm | 5.37 | n.a. | 0.16 |
| | 100-200 µm | 5.44 | n.a. | 0.09 |

| | | | | |
|---|---|---|---|---|
| n.a.=not analysed | | | | |

The theoretical carbon content in a cemented carbide is the carbon content assuming that the WC is stoichiometric, i.e. the relation between W and C is 1:1, which for a cemented carbide with 12 wt% Co is 5.397 wt% C. C can however be dissolved in solid solution in the Co and the C content can be varied without any formation of free graphite or eta phase. Such range for the present composition is about 5.2-5.4 wt% C.

### Air classification

An air classification was performed in a laboratory air classification machine from Hosokawa Alpine (ATP50). By adjusting the parameters of the air classification machine to optimized performance a removal of loose graphite powder was obtained.

In this operation cemented carbide fragments finer than about 3 µm are collected in the "fine powder bin" together with graphite particles. The remaining powder is collected in the "coarse powder bin". Residue of coarse graphite particles follow the powder outlet to the "coarse powder bin". Unlike most graphite powder particles that are flaky, these coarse residual graphite particles typically have a less flaky and more compact shape with a size often in the 10-20 µm range. They follow into the "coarse powder bin" because of the chosen set of parameters in the air classification, which is chosen for the purpose of collecting cemented carbide particles larger than about 3 µm into the "coarser powder bin". The coarser powder was then examined in SEM and analysed for carbon. Total carbon content was measured as well as so called "free carbon" content. Free carbon is elemental carbon that is assumed to originate from residual graphite particles and graphite coated on the particles surfaces, that is thereby not dissolved in the metal phase nor part of the carbide compound of the cemented carbide.

### First jet milling

The equipment used for the jet milling was a Jet Mill model 100 AFG from Hosokawa Alpine. In each jet milling 3 kg of powder was charged and processed for 60 minutes using 2.5 bar's inlet air pressure and 5000 rpm classifier wheel speed. By using this set of parameters, the cemented carbide particles are not milled. Remaining graphite particles are milled and carbon on the surfaces of the cemented carbide particles are removed from the powder via the classification wheel.

The powder batches collected from the 100 AFG-unit were examined, sieved and chemically analyzed, see Table 2. Sieve size data was about 20 % >100 µm, 63 % 50-100 µm and 17 % <50 µm.

### Oxidation followed by vacuum annealing - thermochemical decarburizing

The powder sieved powder fractions were then put in a heating cabinet for oxidation in air at 300°C. The weight increase was monitored to reach 0.21 % for the <50 µm fraction, 0.15 % for the 50-100 µm fraction and 0.09 % for the >100 µm. They were then re-mixed to a 2.86 kg batch and vacuum annealed as before at 750°C. The three powder size fractions were sieved and chemically analysed, see Table 2.

### Second jet milling

Thereafter, the powder fractions were put into the 100 AFG unit for jet millling for 30 minutes using 2.5 bar's inlet air pressure and 5000 rpm classifier wheel speed. Afterwards, the powder was sieved again.

In the two examples of methods disclosed here above, both the method of making powder 1 that is a large batch process and the method of making powder 2 is a smaller batch process, it was concluded that:
- Large carbon particles were removed from the powders.
- Carbon on the outer surfaces of the dense and spherically shaped cemented carbide particles were removed.

While the disclosure has been described in connection with various exemplary embodiments, it is to be understood that the disclosure is not to be limited to the disclosed exemplary embodiments; on the contrary, it is intended to cover various modifications and equivalent arrangements within the appended claims. Furthermore, it should be recognized that any disclosed form or embodiment of the disclosure may be incorporated in any other disclosed or described or suggested form or embodiment as a general matter of design choice. It is the intention, therefore, to be limited only as indicated by the scope of the appended claims appended hereto.

## Claims

1. A method of making a powder of dense and spherically shaped cermet or cemented carbide particles, wherein the method comprises the steps of:
(a) forming spherically shaped granules comprising metal, hard constituents and organic binder;
(b) mixing said spherically shaped granules with a sintering inhibitor powder comprising carbon, preferably graphite, to form a first powder mixture of spherically shaped granules and sintering inhibitor powder;
(c) loading the first powder mixture of spherically shaped granules and sintering inhibitor powder in a furnace chamber;
(d) heat-treating the first powder mixture obtained in step (b) in the furnace chamber up to a sintering temperature to remove organic binder from the spherically shaped granules and to sinter the hard constituents with the metal in each spherically shaped granule and thereby forming a second powder mixture comprising sintered dense spherically shaped cermet or cemented carbide particles and sintering inhibitor powder;
(e) unloading the second powder mixture comprising sintered dense spherically shaped particles and sintering inhibitor powder from the furnace chamber; and
(f) separating the sintering inhibitor powder from the sintered dense spherically shaped particles whereby a final powder of dense and spherically shaped cermet or cemented carbide particles is formed, wherein the separating includes a step of
(g) subjecting the dense and spherically shaped cermet or cemented carbide particles to jet milling.

2. The method in accordance with claim 1, wherein the jet pressure during the jet milling in step (g) is between 1 and 4 bar, preferably between 2 and 3 bar.

3. The method in accordance with any of the preceding claims, wherein the jet milling in step (g) is performed during 10-90 minutes, preferably 30-60 minutes.

4. The method in accordance with any of the preceding claims, wherein the separating step (f) further includes an air classification step (h) prior to the jet milling step (g).

5. The method in accordance with any of the preceding claims, wherein the separating step (f) further includes a thermochemical decarburizing step (i) performed before the jet milling step (g), and if the method includes an air classification step (h) then said thermochemical decarburizing step (i) is performed after said air classification step (h), wherein the thermochemical decarburizing step is performed using a gas at elevated temperature, preferably performed in a rotating tube furnace.

6. The method in accordance with any of the preceding claims, wherein the thermochemical decarburizing step (i) is made at a temperature of between 700°C and 900°C, preferably between 750°C and 800°C.

7. The method in accordance with any of the preceding claims, wherein the method further comprises a thermochemical decarburizing step (j) performed after or subsequent to the jet milling step (g), wherein said thermochemical decarburizing step (j) is performed using a gas at elevated temperature, preferably performed in a rotating tube furnace.

8. The method in accordance with any of the preceding claims, wherein the separation includes only a single jet milling step.

9. The method in accordance with claim 7, wherein the thermochemical decarburizing step (j) is made at a temperature of between 700°C and 900°C, preferably between 750°C and 800°C.

10. The method in accordance with any of claims 1-7, wherein the method comprises an additional jet milling step (k) performed subsequent to the thermochemical decarburizing step (j).

11. The method in accordance with claim 10, wherein jet pressure during the jet milling in step (k) is between 1 and 4 bar.

12. The method in accordance with any of claims 10 - 11, wherein the jet milling in step (k) is performed during 10-60 minutes.

13. Powder of cermet or cemented carbide made in accordance with any of claims 1-12.

14. Use of the powder in accordance with claim 13 in additive manufacturing or near net shape HIP.
